(19) Europäisches Patentamt
European Patent Office
Office européen des brevets

(11) EP 3 378 910 B1

(12) EUROPEAN PATENT SPECIFICATION

(45) Date of publication and mention of the grant of the patent:
**11.08.2021 Bulletin 2021/32**

(51) Int Cl.:
***C09D 11/106*** $^{(2014.01)}$ ***C09D 11/326*** $^{(2014.01)}$
***C09D 11/38*** $^{(2014.01)}$

(21) Application number: **18163231.6**

(22) Date of filing: **22.03.2018**

# (54) WATER-BASED INK COMPOSITION FOR INK JET RECORDING AND COLORING MATERIAL LIQUID

WASSERBASIERTE TINTENZUSAMMENSETZUNG FÜR TINTENSTRAHLAUFZEICHNUNG UND FÄRBEMATERIALFLÜSSIGKEIT

COMPOSITION D'ENCRE AQUEUSE POUR LIQUIDE DE MATIÈRE COLORANTE ET IMPRESSION À JET D'ENCRE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **24.03.2017 JP 2017059079**

(43) Date of publication of application:
**26.09.2018 Bulletin 2018/39**

(73) Proprietor: **Seiko Epson Corporation**
**Tokyo 160-8801 (JP)**

(72) Inventor: **ITO, Hiroshi**
**Suwa-shi, Nagano 392-8502 (JP)**

(74) Representative: **Miller Sturt Kenyon**
**9 John Street**
**London WC1N 2ES (GB)**

(56) References cited:
**WO-A1-01/51530** **GB-A- 2 072 508**
**US-A1- 2016 257 835**

- **EL-REFAIE KENAWY ET AL: "Biocidal polymers: Synthesis, antimicrobial activity, and possible toxicity of poly (hydroxystyrene-co-methylmethacrylate) derivatives", JOURNAL OF APPLIED POLYMER SCIENCE, vol. 120, no. 5, 10 January 2011 (2011-01-10), pages 2734-2742, XP055481722, ISSN: 0021-8995, DOI: 10.1002/app.33046**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).



Printed by Jouve, 75001 PARIS (FR)

## Description

### BACKGROUND

1. Technical Field

The present invention relates to a water-based ink composition for ink jet recording and a coloring material liquid.

2. Related Art

In an ink jet recording method, it is possible to record high-definition images with a relatively simple apparatus, and rapid development is obtained in various fields. However, in a water-based ink composition (hereinafter simply referred to as "ink"), microorganisms may proliferate during storage. When microorganisms grow in the ink, the pH of the ink decreases, the ink component sinks, which may cause deterioration of the ink and nozzle clogging. Therefore, various improvements have been made to the storage properties of the ink, since it is desired to impart preservative performance to the ink without using a biocidal preservative from the viewpoint of environmental considerations. A description of an antifungal and antibacterial active ingredient that can be generally used in the preparation of pharmaceutical formulations is described in GB 2 072 508. Antimicrobial agents that can be used in external preparations for the skin and cleaning products are described in WO 01/51530 and Kenawy et al, Journal of Applied Polymer Science, 120(5), 2734-2742 (2011). An example of aqueous ink compositions that can be used in ink jet recording is described in US 2016/0257835.

Therefore, for example, instead of using a biocidal preservative, it has been suggested that a polyvinyl phenol should be added to the ink to impart preservative properties to the ink (for example, refer to JP-A-2010-195972, JP-A-2003-63127, and JP-T-2010-501671).

However, there are problems with this approach. The ink described in the documents above is not suitable as an ink for ink jet recording since the water-insoluble polyvinyl phenol cannot be used as it is in a water-based ink composition. A water-based ink composition requires other additives, such as a dispersing agent other than polyvinyl phenol to disperse a coloring material.

### SUMMARY

In some aspects of the invention there is provided a water-based ink composition for ink jet recording and a coloring material liquid, which impart preservative performance to an ink and in which a coloring material is stably dispersed even in the case where a reduced amount of a biocidal preservative is used.

The invention can be realized in the following aspects or application examples.

According to an aspect of the invention, there is provided a water-based ink composition for ink jet recording that includes a coloring material, a first resin, a surface tension adjusting agent, and water, and has a pH of 7.0 or more and 10.0 or less, in which the first resin contains a first vinyl monomer having a phenol skeleton as a constituent unit, and the surface tension adjusting agent is at least one selected from the group consisting of a nonionic surfactant having an HLB of 8 or less and a water-soluble organic solvent having a water-octanol partition coefficient (represented as log P value) of 0.5 or more.

According to the application example, since the first resin contains the first vinyl monomer having the phenol skeleton as the constituent unit, the first resin has a phenol moiety having a preservative function. Therefore, even in a case where the use amount of the biocidal preservative is reduced, it is possible to provide the water-based ink composition for ink jet recording imparting preservative performance to the ink. In addition, the first resin having the phenol moiety and the surface tension adjusting agent having a high hydrophobicity are blended so that dispersion stability of the coloring material can be obtained. Furthermore, when the pH of the ink is 7.0 or more and 10.0 or less, neutralization of the phenolic hydroxyl group of the first resin is suppressed, the preservative performance of the ink is maintained, and the first resin has slight hydrophilicity.

In the application example, the first resin further contains a second aromatic vinyl monomer other than the first vinyl monomer having the phenol skeleton as a constituent unit.

According to the application example, the first resin copolymerized from the second aromatic vinyl monomer and the first vinyl monomer having the phenol skeleton can have a slight hydrophilicity and strong hydrophobicity. Therefore, the first resin can be strongly hydrophobic-bonded to the coloring material, which is particularly highly hydrophobic, and the coloring material is stably dispersed even in the presence of the surface tension adjusting agent having high hydrophobicity.

In the application example, the first resin further contains a third water-soluble vinyl monomer as a constituent unit.

According to the application example, when the first resin further contains the third water-soluble vinyl monomer as the constituent unit, the hydrophilicity of the first resin is improved and the coloring material is stably dispersed.

In the application example, it is preferable that a second resin be further included, which contains a second aromatic vinyl monomer and a third water-soluble vinyl monomer as constituent units.

According to the application example, the second resin is further included, so that the coloring material can be more stably dispersed.

In the application example, it is preferable that a biocidal antibacterial agent or an antifungal agent other than the first resin be contained in an amount of no more than 1% by mass.

According to the application example, even in a case where the biocidal antibacterial agent or an antifungal agent is not contained more than 1% by mass, it is possible to sufficiently impart preservative performance to the ink.

According to another aspect of the invention, there is provided a coloring material liquid that includes a coloring material, a first resin, a surface tension adjusting agent, and water, and has a pH of 7.0 or more and 10.0 or less, in which the first resin contains a first vinyl monomer having a phenol skeleton as a constituent unit, and the surface tension adjusting agent is at least one selected from the group consisting of a nonionic surfactant having an HLB of 8 or less and a water-soluble organic solvent having a water-octanol partition coefficient (represented as log P value) of 0.5 or more.

According to the application example, since the first resin contains the first vinyl monomer having the phenol skeleton as the constituent unit, the first resin has a phenol moiety having a preservative function. Therefore, even in a case where the use amount of the biocidal preservative is reduced, it is possible to impart the preservative performance to the coloring material liquid. In addition, the first resin has the phenol moiety, and the surface tension adjusting agent having a high hydrophobicity is blended, so that the dispersion stability of the coloring material can be obtained. Furthermore, when the pH of the ink is 7.0 or more and 10.0 or less, neutralization of the phenolic hydroxyl group of the first resin is suppressed, the preservative performance of the coloring material liquid is maintained, and the first resin has slight hydrophilicity.

## DESCRIPTION OF EXEMPLARY EMBODIMENTS

Preferred embodiments of the invention will be described below. The embodiments described below describe one example of the invention. In addition, the invention is not limited to the following embodiments, and includes various modified examples that are implemented within the scope not changing the gist of the invention.

### 1. Water-Based Ink Composition for Ink Jet Recording and Coloring Material Liquid

A water-based ink composition (hereinafter, referred to as "ink") for ink jet recording and a coloring material liquid according to one embodiment of the invention are a water-based ink composition for ink jet recording that includes a coloring material, a first resin, a surface tension adjusting agent, and water, and has a pH of 7.0 or more and 10.0 or less. The first resin contains a second aromatic vinyl monomer other than the first vinyl monomer having the phenol skeleton as a constituent unit. The surface tension adjusting agent is at least one selected from the group consisting of a nonionic surfactant having an HLB of 8 or less and a water-soluble organic solvent having a water-octanol partition coefficient (log P value) of 0.5 or more. Hereinafter, components contained, and components that can be contained in the water-based ink composition for ink jet recording and the coloring material liquid according to the embodiment will be described.

In the embodiment, the coloring material liquid is used as a raw material liquid of the ink, and can be an ink as it is or by appropriately adding water, a solvent, or other additives and mixing. Therefore, the water-based ink composition for ink jet recording will be mainly described as an example in the following description.

### 1.1. Coloring Material

The water-based ink composition for ink jet recording according to the embodiment contains a coloring material. As the coloring material, either a pigment or a dye can be used.

Examples of the pigment include an inorganic pigment, an organic pigment, and the like. The inorganic pigment is not particularly limited, and examples thereof include carbon black (C.I. Pigment Black 7) such as furnace black, lamp black, acetylene black and channel black, iron oxide, titanium oxide, zinc oxide, silica, and the like.

The organic pigment is not particularly limited, and examples thereof include a quinacridone-based pigment, a quinacridone quinone-based pigment, dioxazine-based pigment, phthalocyanine-based pigment, anthrapyrimidine-based pigment, anthanthrone-based pigment, indanthrone-based pigment, flavanthrone-based pigment, perylene-based pigment, diketopyrrolopyrrole-based pigment, perinone-based pigment, quinophthalone-based pigment, anthraquinone-based pigment, thioindigo-based pigment, benzimidazolone-based pigment, isoindolinone-based pigment, azomethine-based pigment, an azo-based pigment, and the like.

The pigment may be dispersed in water by using a dispersant selected from a water-soluble resin, a water-dispersible resin, and a surfactant, or may be used as a self-dispersion pigment by oxidizing or sulfonating the pigment surface with ozone, hypochlorous acid, fuming sulfuric acid or the like.

One type of pigment may be used alone or two or more types may be used in combination.

The dyes are not particularly limited, examples of water-dispersible dyes include a disperse dye, an oil soluble dye, and the like. More specifically, examples of the disperse dyes include C.I. Disperse Red 60, 82, 86, 86:1, 167:1, 279, C.I. Disperse Yellow 64, 71, 86, 114, 153, 233, 245, C.I. Disperse Blue 27, 60, 73, 77, 77:1, 87, 257, 367, C.I. Disperse Violet 26, 33, 36, 57, C.I. Disperse Orange 30, 41, 61 and the like. Examples of the oil soluble dyes include C.I. Solvent Yellow 16, 21, 25, 29, 33, 51, 56, 82, 88, 89, 150, 163, C.I. Solvent Red 7, 8, 18, 24, 27, 49, 109, 122, 125, 127, 130, 132, 135, 218, 225, 230, C.I. Solvent Blue 14, 25, 35, 38, 48, 67, 68, 70, 132, C.I. Solvent Black 3, 5, 7, 27, 28, 29, 34, and the like.

One type of dye may be used alone or two or more types may be used in combination. Furthermore, a mixture of a dye and a pigment may be used.

The content of the coloring material can be appropriately adjusted depending on the application, and it is preferably 0.10% by mass or more and 20.0% by mass or less, more preferably 0.20% by mass or more and 15.0% by mass or less, and still more preferably 1.0% by mass or more and 10.0% by mass or less with respect to the total amount (100% by mass) of the water-based ink composition for ink jet recording.

1.2. Resin

The water-based ink composition for ink jet recording according to the embodiment includes the first resin containing the first vinyl monomer having the phenol skeleton as a constituent unit.

The water-based ink composition for ink jet recording according to the embodiment uses the resin containing the first vinyl monomer having the phenol skeleton as a constituent unit as the first resin, so that the first resin has a phenol moiety having preservative function. Therefore, it is possible to provide the water-based ink composition for ink jet recording which imparts the preservative performance to the ink, even in a case where the use amount of a biocidal preservative is reduced. In addition, since the first resin has the phenol moiety, and a surface tension adjusting agent having high hydrophobicity described later is blended in the ink, the coloring material is stably dispersed and discharge during the ink jet recording is stabilized.

Suitably, the first vinyl monomer having a phenol skeleton is a compound of formula (I):

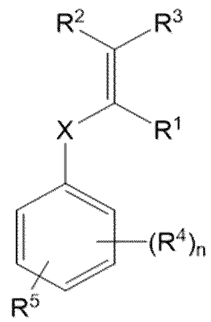

(I)

wherein:

X is a bond, -OC(O)- or -NHC(O)-;
$R^1$ is H or methyl;
one of $R^2$ and $R^3$ is H and the other of $R^2$ and $R^3$ is H,$-CH_2OH$ or -C(O)OH;
$R^4$ is OH or $O(C_{1-4}$ alkyl);
$R^5$ is H or OH and
n is 0, 1 or 2.

Examples of the first vinyl monomer having the phenol skeleton constituting the first resin include o-vinylphenol, m-vinylphenol, p-vinylphenol, hydroxy-α-methylstyrene, 2-hydroxyphenyl methacrylate, 4-hydroxyphenyl methacrylate, p-hydroxy-2-methylacrylanilide, 4-hydroxyphenyl acrylate, p-hydroxy cinnamic alcohol, 4-hydroxy cinnamic acid, p-sinapyl alcohol, coniferyl alcohol, and the like.

In the water-based ink composition for ink jet recording according to the embodiment, the first resin further

includes an aromatic vinyl monomer other than the vinyl monomer having the phenol skeleton as described above as the constituent unit. The first resin copolymerized from the aromatic vinyl monomer and the vinyl monomer having the phenol skeleton can have a slight hydrophilicity and strong hydrophobicity. Therefore, the first resin functions as a dispersing agent for the coloring material. In particular, the first resin is strongly hydrophobically bonded to the coloring material with high hydrophobicity, and the coloring material is stably dispersed even in the presence of the surface tension adjusting agent with high hydrophobicity.

Suitably, the second aromatic vinyl monomer is a compound of general formula (II): II)

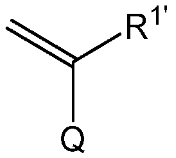

(II)

wherein: Q is phenyl or napthyl and $R^{1'}$ is H or $C_{1-3}$ alkyl, more suitably H or methyl.

Examples of the aromatic vinyl monomer constituting the first resin include styrene, α-methylstyrene, 1-vinylnaphthalene, 2-vinylnaphthalene, and the like.

In addition, in the water-based ink composition for ink jet recording according to the embodiment, the first resin further includes a water-soluble vinyl monomer as the constituent unit. When the first resin further includes the water-soluble vinyl monomer as the constituent unit, the hydrophilicity of the first resin is improved and the coloring material is stably dispersed. Here, in the embodiment, the water-soluble vinyl monomer refers to a vinyl monomer which is soluble in neutral to weakly alkaline water having a pH of 7.0 to 10.0 at 25°C by 2% by mass or more with respect to 100% by mass of water.

Examples of water-soluble vinyl monomers are well known and are readily available. For example the water-soluble vinyl monomer constituting the first resin may be a monomer of formula (III):

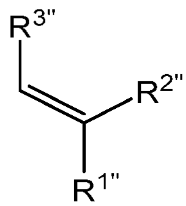

(III)

wherein:

$R^{1"}$ is H or methyl;
$R^{3"}$ is H or may combine with $R^2$ as described below; and
$R^{2"}$ is a water-soluble moiety, typically:

a) a moiety which dissociates in water to form ions, for example an anionic moiety and hydrogen ions;
b) a non-ionic moiety with one or more hydrophilic substituents; or
c) a moiety which dissociates in water to form an amphoteric moiety; or

$R^{2"}$ combines with $R^{3"}$ to form a -C(O)-O-C(O)- or -C(O)-NH-C(O)- moiety such that the monomer of formula (II) is a cyclic anhydride or imide.

In the monomer of formula (II), $R^{2"}$ may be:

a) -C(O)OH, $S(O)_2OH$ or -C(O)O-$C_{1-6}$ alkyl substituted with -C(O)OH, -$OS(O)_2OH$ or -$OP(O)_2OH$; or
$R^{2"}$ and $R^{3"}$ together form a -C(O)-O-C(O)- or -C(O)-NH-C(O)- moiety such that the compound of formula (II) is a cyclic anhydride or imide;
such that, in water, an anionic $R^{2"}$ moiety is formed;

b) $-R^{4"}$, $-X-R^{4"}$ or $-NR^{4"}R^{5"}$
X is -C(O)O- or $-C(O)NR^{6"}-$;
$R^{6"}$ is H or $C_{1-4}$ alkyl;
$R^4$ is $C_{1-6}$ alkyl substituted with one or more OH group;
$-C_{1-6}$alkylene-O-$C_{1-6}$ alkyl substituted with one or more OH group; or
$(CH_2CH_2O)_nCH_3$
where n is 2-600, more usually 2-100, 2-20, 2-30, 2-10 or 2-5; or
when X is $-C(O)NR^{6"}-$, $R^{4"}$ may be H;
$R^{5"}$ is H or $C_{1-4}$ alkyl; or
$R^{4"}$ and $R^{5"}$ together may form a 5- or 6-membered heterocyclic ring optionally substituted with oxo; or

c) $-R^{7"}$ or $-X-R^{7"}$
X is as defined above;
$R^{7"}$ is $C_{1-10}$ alkyl substituted with an amphoteric group such as -O-P(O)(O-)-O-($C_{1-10}$ alkylene)-$N^+(R^{8"})(R^{9"})(R^{10"})$;

$-N^+(R^{8"})(R^{9"})(R^{10"})$-($C_{1-10}$ alkylene)-$C(O)O^-$
$-N^+(R^{8"})(R^{9"})(R^{10"})$-($C_{1-10}$ alkylene)-$S(O)_2O^-$
$-N^+(R^{8"})(R^{9"})(R^{10"})$-($C_{1-10}$ alkylene)-$OP(O)(OH)O^-$
where each of $R^{8"}$, $R^{9"}$ and $R^{10"}$ is H or $C_{1-6}$ alkyl.

Examples of an anionic water-soluble vinyl monomer include acrylic acid, methacrylic acid, maleic anhydride, vinylsulfonic acid, and the like. Examples of a nonionic water-soluble vinyl monomer include hydroxyethyl methacrylate, acrylamide, N-vinylpyrrolidone, hydroxyethylacrylamide, allyl alcohol, glycerol monoallyl ether, poly (ethylene glycol) methyl ether methacrylate, and the like. Examples of an amphoteric water-soluble vinyl monomer include 2-methacryloyloxyethyl phosphorylcholine, 3-[[2- (methacryloyloxy) ethyl] dimethylammonio] propionate, and the like.

In the water-based ink composition for ink jet recording according to the embodiment, the first resin can be obtained by copolymerizing the above monomers by a known method in the related art.

One type of first resin may be used alone or two or more types may be used in combination.

The content of the first resin is preferably 0.005% by mass or more and 5.0% by mass or less, more preferably 0.01% by mass or more and 2.0% by mass or less, and still more preferably 0.1% by mass or more and 1.0% by mass or less with respect to the total mass (100% by mass) of the water-based ink composition for ink jet recording. When the content of the first resin is within the above range, it is possible to impart the preservative performance to the ink, and the dispersion stability of the coloring material is obtained.

Furthermore, the water-based ink composition for ink jet recording according to the embodiment further preferably includes a second resin containing a second aromatic vinyl monomer and a third water-soluble vinyl monomer as the constituent units, in addition to the first resin, wherein the second aromatic vinyl monomer and the third water-soluble vinyl monomer are as defined above. The water-based ink composition for ink jet recording according to the embodiment further includes the second resin in which the second aromatic vinyl monomer and the third water-soluble vinyl monomer are copolymerized, so that the coloring material can be stably dispersed particularly for a coloring material with high hydrophobicity. The addition amount of the second resin is preferably equal to and less than the addition amount of the first resin from the viewpoint of the preservative performance and the dispersion stability of the coloring material.

1.3. Surface Tension Adjusting Agent

The water-based ink composition for ink jet recording according to the embodiment includes the surface tension adjusting agent. The surface tension adjusting agent is used for lowering a surface tension at the time of dissolving the water to adjust wettability of a printing substrate of the ink, a discharge flow path, and a discharge head. In the embodiment, the surface tension adjusting agent is at least one selected from the group consisting of a nonionic surfactant having an HLB of 8 or less and a water-soluble organic solvent having a water-octanol partition coefficient (represented as log P value) of 0.5 or more.

Here, HLB is a value for evaluating the hydrophilicity of the compound proposed by Davis et al., for example, a value calculated by a Davies method defined in a document "J. T. Davies and E. K. Rideal, "Interface Phenomena" 2nd ed. Academic Press, New York 1963", and is a value calculated by the following formula.

$$\text{HLB value} = 7 + \Sigma [1] + \Sigma [2]$$

(herein, [1] represents the hydrophilic group numbers and [2] represents the hydrophobic group numbers.)

In the present specification, the water-octanol partition coefficient is as defined by OECD Test Guideline 107107 and is represented in terms of its logarithm in base 10 (log P). The log P value gives an indication of the hydrophobicity or hydrophilicity of a solvent. Thus, the higher the log P value, the higher the hydrophobicity, and the lower the log P value, the higher the hydrophilicity. In a water-soluble organic solvent having a water-octanol partition coefficient (log P value) of 0.5 or more, the water-soluble organic solvent itself has preservative performance.

The nonionic surfactant having an HLB of 8 or less is not particularly limited, and examples thereof include Olfine E 1004 (HLB: 7), Surfinol SE (HLB: 6), Surfynol 61 (HLB: 6), Surfynol 104 (HLB: 4), Surfynol 420 (HLB: 4), Surfynol 82 (HLB: 4), Surfynol DF110D (HLB: 3), and the like (hereinbefore, all of these are trade names, manufactured by Nisshin Chemical Industry Co., Ltd.). One type of nonionic surfactant having an HLB of 8 or less may be used alone or two or more types may be used in combination.

The water-soluble organic solvent having a water-octanol partition coefficient (log P value) of 0.5 or more is not particularly limited, and examples thereof include a diol-based solvent, a glycol ether-based solvent, a glycerin ether-based solvent, and the like. Examples of the glycol ether-based solvent include 1,2-hexanediol (log P: 0.70), 1,2-heptanediol (log P: 1.0), 1,2-octane diol (log P: 1.32), and the like. Examples of the glycol ether-based solvent include butyl triglycol (log P: 0.5), butyl diglycol (log P: 0.56), propylene glycol monopropyl ether (log P: 0.61), dipropylene glycol monopropyl ether (log P: 0.60), propylene glycol monobutyl ether (log P: 1.14), and the like. Examples of the glycerin ether-based solvent include 3-butoxy-1,2-propanediol (log P: 0.59), 3-pentyloxy-1,2-propanediol (log P: 0.83), 3-hexyloxy-1,2-propanediol (log P: 1.36), and the like. One type of water-soluble organic solvent having a water-octanol partition coefficient (log P value) of 0.5 or more may be used alone or two or more types may be used in combination. In addition, the water-soluble organic solvent may be used in combination with a nonionic surfactant having an HLB of 8 or less.

The content of the surface tension adjusting agent is preferably 0.10% by mass or more and 10.0% by mass or less, and more preferably 0.20% by mass or more and 5.0% by mass or less with respect to the total amount (100% by mass) of the water-based ink composition for ink jet recording according to the embodiment. When the content of the surface tension adjusting agent is within the above range, the wettability of the water-based ink composition for ink jet recording on the recording medium can be appropriately adjusted. In addition, it is possible to impart the preservative performance to the ink and the dispersion stability of the coloring material can be obtained.

1.4. Water

The water-based ink composition for ink jet recording according to the embodiment contains water. Examples of the water include pure water such as ion exchanged water, ultrafiltered water, reverse osmosis water, and distilled water, and water obtained by removing ionic impurities as much as possible, such as ultrapure water. In addition, when water sterilized by ultraviolet irradiation or addition of hydrogen peroxide is used, generation of bacteria and fungi can be prevented in a case where the water-based ink composition for ink jet recording is preserved for a long time.

The content of water is preferably 40% by mass or more, more preferably 45% by mass or more, still more preferably 50% by mass or more with respect to the total amount (100% by mass) of the water-based ink composition for ink jet recording. When the water content is 40% by mass or more, the water-based ink composition for ink jet recording has a relatively low viscosity. In addition, when the water content is 40% by mass or more, compatibility with the surface tension adjusting agent is improved, and the stability of the water-based ink composition for ink jet recording is improved. In addition, the upper limit of the content of water is preferably 90% by mass or less, more preferably 85% by mass or less, and still more preferably 80% by mass or less with respect to the total amount of the water-based ink composition for ink jet recording.

1.5. Moisturizing Agent

The water-based ink composition for ink jet recording according to the embodiment may further contain a moisturizing agent (wetting agent). The moisturizing agent is not particularly limited and can be used as long as it is generally used for ink composition for ink jet recording. The standard boiling point of the moisturizing agent is preferably 180°C or higher, more preferably 180°C or higher and 250°C or lower in the standard boiling point range for the water-based ink composition for ink jet recording used for an evaporation drying type ink, and more preferably 200°C or higher for the water-based ink composition for ink jet recording used for a penetration drying type ink. When the standard boiling point is within the above range, good water retention and wettability can be imparted to the ink composition.

The moisturizing agent is not particularly limited, and examples thereof include polyols such as diethylene glycol, triethylene glycol, tetraethylene glycol, pentamethylene glycol, trimethylene glycol, 2-butene-1,4-diol, 2-ethyl-1,3-hexanediol, 2-methyl-2,4-pentanediol, tripropylene glycol, isobutylene glycol, glycerin, diglycerin, mesoerythritol, trimethylolpropane, ditrimethylolpropane, pentaerythritol, and dipentaerythritol, lactams such as 2-pyrrolidone and ε-caprolactam, urea derivatives such as urea, thiourea, ethylene urea, and 1,3-dimethylimidazolidinones, monosaccharides

such as glucose, mannose, fructose, ribose, xylose, arabinose, galactose, aldonic acid, glucitol (sorbit), maltose, cellobiose, lactose, sucrose, trehalose, and maltotriose, disaccharides, oligosaccharides, polysaccharides, and derivatives of these saccharides, glycine, betaines of trimethylglycine, and the like. Among these, trimethylglycine, 2-pyrrolidone, and urea are particularly preferably used.

One type of moisturizing agent may be used alone or two or more types may be used in combination.

The content of the moisturizing agent can be appropriately adjusted depending on the application, and it is preferably 5.0% by mass or more and 30% by mass or less, more preferably 10% by mass or more and 25% by mass or less, and still more preferably 15% by mass or more and 20% by mass or less with respect to the total amount (100% by mass) of the water-based ink composition for ink jet recording according to the embodiment.

### 1.6. Wetting Agent

The water-based ink composition for ink jet recording according to the embodiment may further include a wetting agent. The wetting agent is not particularly limited as long as it is a water-soluble surfactant normally used in the ink jet ink composition, for example a silicone-based surfactant, a fluorine-based surfactant or an acetylene glycol-based surfactant.

The commercially available silicone-based surfactants are not particularly limited, and examples thereof include, BYK-306, BYK-307, BYK-333, BYK-341, BYK-345, BYK-346, BYK-347, BYK-348, BYK-349, BYK-3455 (hereinbefore, trade names, manufactured by BYK Japan KK), Silface SAG002, 005, 014, 503A, (hereinbefore, trade names, manufactured by Nisshin Chemical Industry Co., Ltd.), KF-351A, KF-352A, KF-353, KF-354L, KF-355A, KF-615A, KF-945, KF-640, KF-642, KF-643, KF-6020, X-22-4515, KF-6011, KF-6012, (hereinbefore, trade names, manufactured by Shin-Etsu Chemical Co., Ltd.), and the like.

The commercially available fluorine-based surfactant is not particularly limited, and examples thereof include FC-4430, FC-4432 (hereinbefore, trade names, manufactured by 3M Japan Ltd.), Megafac F-444, F-477, F553, F556 (hereinbefore, trade names, manufactured by DIC Corporation), Surflon S-241, S-242, S243, S-386 (hereinbefore, trade names, manufactured by AGC Seimi Chemical Co., Ltd.), and the like.

The commercially available acetylene glycol-based surfactant is not particularly limited, and examples thereof include Surfynol 82, 465, 485, 2502, Olfine E1010, E1020, PD-002W, PD-004, EXP4001, EXP4002, EXP4123, EXP4300 (hereinbefore, trade names, manufactured by Nisshin Chemical Industry Co., Ltd.), Acetylenol E00, E103T, E40, E60, E100, E200 (hereinbefore, trade names, manufactured by Kawaken Fine Chemicals Co., Ltd.), and the like.

### 1.7. pH Adjusting Agent

The water-based ink composition for ink jet recording according to the embodiment may further contain a pH adjusting agent for the purpose of adjusting the pH of the ink. The pH adjusting agent is not particularly limited, and examples thereof include sulfuric acid, hydrochloric acid, nitric acid, and the like as an inorganic acid, and lithium hydroxide, sodium hydroxide, potassium hydroxide, ammonia, and the like as an inorganic base. Examples of an organic base include triethanolamine, diethanolamine, monoethanolamine, triisopropanolamine, diisopropanolamine, trishydroxymethylaminomethane, and the like. Examples of an organic acid include adipic acid, citric acid, succinic acid, lactic acid, and the like.

One type of pH adjusting agent may be used alone or two or more types may be used in combination.

The content of the pH adjusting agent can be appropriately adjusted and added so that the ink pH is 7.0 or more and 10.0 or less.

### 1.8. Other Components

For the purpose of discharge stability from the head, improvement of clogging, and prevention of deterioration of the ink composition, the water-based ink composition for ink jet recording according to the embodiment may appropriately add various additives such as a dissolution aid, a viscosity adjusting agent, an antioxidant, a fungicide, and a chelating agent for capturing metal ions affecting dispersion.

The water-based ink composition for ink jet recording according to the embodiment contains the first resin, so that it is possible to impart the preservative performance to the ink without separately using a biocidal preservative. Therefore, it is not required to contain more than 1% by mass of biocidal antibacterial agent, microbicide, antifungal agent, preservative, and the like as used in the water-based ink composition in the related art.

The biocidal compound may be, for example, an isothiazoline compound or a fumaric ester-based compound. Examples of isothiazoline compounds include 1,2-benzisothiazolin-3-one (BIT), 3-methyl-4-isothiazolin-3-one (MIT), 5-chloro-2-methyl-4-isothiazoline-3-one (CMI), 2-octyl-4-isothiazolin-3-one (OIT), 4,5-dichloro-2-octyl-4-isothiazolin-3-one (2Cl-OIT), and the like. Examples of fumaric acid ester-based compound include dimethyl fumarate (DMF), diethyl

fumarate (DEF), dibutyl fumarate (DBF), and the like. In addition, 2-bromo-2-nitropropane-1,3-diol (bronopol), 2,2-dibromo-3-nitrile propionamide (DBNPA), and the like can be included.

1.9. Method for Preparing Water-Based Ink Composition for Ink Jet Recording

The water-based ink composition for ink jet recording according to the embodiment can be prepared by mixing the above components. The mixing method is not particularly limited, and a known method in the related art can be used. In addition, the water-based ink composition for ink jet recording according to the embodiment may use the coloring material liquid according to the embodiment as it is, and may be prepared by appropriately adding water, a solvent, and other additives to the coloring material liquid and mixing.

1.10. Physical Properties

The surface tension of the water-based ink composition for ink jet recording according to the embodiment at 20°C is preferably 20 mN/m or more and 50 mN/m or more, and more preferably 25 mN/m or more and 40 mN/m or less, from the viewpoint of balance between recording quality and reliability as an ink composition for ink jet. The surface tension can be measured by confirming the surface tension when a platinum plate is wetted with ink under an environment of 20°C, using an automatic surface tensiometer CBVP-Z (manufactured by Kyowa Interface Science Co., Ltd.).

In addition, the viscosity of the water-based ink composition for ink jet recording according to the embodiment at 20°C is preferably 2 mPa·s or more and 30 mPa·s or less, and more preferably 2 mPa·s or more and 20 mPa·s or less from the same viewpoint. The viscosity can be measured by raising Shear Rate to 10 to 1,000 under an environment of 20°C and reading the viscosity at Shear Rate 200, using a viscoelasticity tester MCR-300 (manufactured by Pysica Corporation).

In addition, in the water-based ink composition for ink jet recording according to the embodiment, the pH is 7.0 or more and 10.0 or less, preferably 7.5 or more and 9.5 or less, and more preferably 8.0 or more and 9.0 or less. In the embodiment, when the pH of the ink is 7.0 or more and 10.0 or less, unintentional neutralization of the phenolic hydroxyl group of the first resin can be avoided and the preservative performance of the ink can be maintained. A part of the phenolic hydroxyl group is neutralized, so that it is possible to impart slight hydrophilicity to the first resin and to disperse the first resin in the ink. In addition, when the pH of the ink is 8.0 or more, the hydrophilicity of the first resin is further improved, and the first resin can be stably dispersed in the ink.

1.11. Application

The water-based ink composition for ink jet recording according to the invention is contained in an ink cartridge of a known ink jet recording apparatus, and ink droplets are discharged, and the droplets are adhered to a recording medium such as paper to record an image. As the ink jet recording apparatus, an ink jet recording apparatus configured to be capable of mounting a vibratable electrostrictive element on the basis of an electric signal, and to be capable of discharging ink by vibration of the electrostrictive element is preferable.

Examples of the methods of discharging the water-based ink composition for ink jet recording from the nozzle include a method in which a strong electric field is applied between accelerating electrodes placed in front of the nozzle and the nozzle to discharge droplets of ink continuously from the nozzles, and the droplets of the ink are discharged in accordance with the recording information signal while the droplets of the ink fly between the deflecting electrodes (electrostatic suction method); a method in which pressure is applied to the ink with a small pump and the nozzle is mechanically vibrated by a crystal oscillator or the like to forcibly discharge the droplets of the ink; a method in which pressure and a recording information signal are simultaneously applied to ink by a piezoelectric element to discharge and record the droplets of the ink (piezo method); a method in which ink is heated and foamed with a microelectrode according to a recording information signal, and droplets of ink are discharged and recorded (thermal jet method), and the like.

As the ink jet head, either a line type ink jet head or a serial type ink jet head can be used.

In the present invention, the recording medium to be printed is not particularly limited and a water-based ink composition and coloring material liquid of the invention can be used in a method for recording on various recording media. The Suitable recording media include not only fabrics such as cotton, silk, polyester, polyurethane, and nylon with high ink absorbency, exclusive paper for ink jet, wood free paper with moderate absorbency, copy paper, but also coated paper and plastic film with low absorbency or non-absorbency.

The recording medium with low absorbency is not particularly limited, and for example, a coated paper having a coating layer formed by applying a coating material on the surface can be used. The coated paper is not particularly limited, and examples thereof include printing paper such as art paper, coated paper, and matte paper.

The recording medium with non-absorbency is not particularly limited, but examples thereof include a plastic

film not having an ink absorption layer, a medium coated with plastic on a base material such as paper, a medium having a plastic film bonded thereto, and the like. Examples of plastics here include polyvinyl chloride, polyethylene terephthalate, polycarbonate, polystyrene, polyurethane, polyethylene, polypropylene, and the like.

Here, "recording medium with low absorbency" or "recording medium with non-absorbency" refers to a medium to be recorded having a water absorption amount of 10 mL/$m^2$ or less from contact start to 30 msec in the Bristow method. The Bristow method is the most popular method as a method for measuring the amount of liquid absorption in a short time and is adopted by Japan Paper and Pulp Technology Association (JAPAN TAPPI). Details of the test method are described in a "paper and paperboard - liquid absorption test method - Bristow method" of the standard No. 51 of "JAPAN TAPPI paper pulp test method 2000 edition".

In the water-based ink composition for ink jet recording according to the embodiment, since the resin containing the first vinyl monomer having the phenol skeleton as the constituent unit is used as the first resin, the first resin has phenol moieties having a preservative function. Therefore, even in a case where the use amount of the biocidal preservative is reduced, it is possible to provide the water-based ink composition for ink jet recording imparting the preservative performance to the ink. In addition, the first resin having phenol moieties and the surface tension adjusting agent having high hydrophobicity are blended, so that dispersion stability of the coloring material can be obtained. Furthermore, when the pH of the ink is 7.0 or more and 10.0 or less, neutralization of the phenolic hydroxyl group of the first resin is suppressed, the storage stability performance of the ink is maintained, and it is possible to impart some hydrophilicity to the first resin. Therefore, even when ink jet recording is performed using the ink, the biocidal preservative is not released from the ink jet recording or the image obtained by recording, so that it is safe without the risk of skin sensitization and does not impose any environmental impact.

## 2. Example

Hereinafter, the invention will be described more specifically with reference to examples and comparative examples, and the invention is not limited to only these examples.

### 2.1. Preparation of Water-based Ink Composition for Ink Jet Recording

Prior to performing various evaluations, first, the following dispersing liquids 1 and 2 were prepared before preparing the water-based ink compositions for ink jet recording of Examples and Comparative Examples. The materials are as described in Table 1 below.

Table 1

| Coloring Material Dispersing Liquid | | Dispersing Liquid 1 | Dispersing Liquid 2 |
|---|---|---|---|
| MARUKA LYNCUR-M | | 10 g | 10 g |
| Neutralizing Agent | Sodium Hydroxide | 1.6 g | 1.6 g |
| Pure Water | | 140 g | 150 g |
| Coloring Material | Pigment Violet 19 | 30 g | - |
| | Disperse Red 60 | - | 25 g |

#### 2.1.1. Preparation of Dispersing Liquids 1 and 2

Dispersing Liquid 1

1.6 g of sodium hydroxide as a neutralizing agent and 140 g of pure water were mixed with 10 g of MARUKA LYNCUR-M (trade name, manufactured by Maruzen Petrochemical Co., Ltd., poly para-vinyl phenol) as a resin having a phenol skeleton and dissolved while heating to prepare a resin solution. To the resin solution, 30 g of C.I. Pigment Violet 19 as a coloring material was mixed, dispersed with a paint shaker (zirconia beads 1.0 mm, bead packing ratio 60%) until the average particle diameter of a pigment is 150 nm, filtered with a filter having a pore diameter of 8 μm, and pure water was added to prepare Magenta dispersing liquid 1 having a coloring material concentration of 12%.

Dispersing Liquid 2

Dispersing liquid 2 was prepared in the same manner as the dispersing liquid 1. The materials used were the

combinations in Table 1.

2.1.2. Synthesis of Resins 1 to 5

Next, resins 1 to 5 were synthesized. The materials are as described in Table 2 below.

Table 2

| Resin | | Resin 1 | Resin 2 | Resin 3 | Resin 4 | Resin 5 |
|---|---|---|---|---|---|---|
| Aromatic Vinyl Monomer | Styrene | 2 g | - | 2 g | 2 g | 2 g |
| | α-Methylstyrene | - | 2.2 g | - | - | - |
| Vinyl Monomer Having Phenol Skeleton | p-Vinyl Phenol | 2.4 g | - | 1 g | - | - |
| | 2-Hydroxyphenyl Methacrylate | - | 3 g | - | 1.2 g | - |
| Water-soluble Vinyl Monomer | Maleic Anhydride | - | - | 0.5 g | 0.5 g | 2 g |

Resin 1

2 g of styrene as an aromatic vinyl monomer and 2.4 g of p-vinyl phenol as a vinyl monomer having a phenol skeleton were mixed in 10 ml of tetrahydrofuran, a solution of 2 ml of tetrahydrofuran in which 0.1 g of separately adjusted 2,2'-azobis (isobutyronitrile) dissolved beforehand was added, and the reaction was performed at 60°C for 48 hours. After the reaction, the solvent was removed under reduced pressure and dried to obtain Resin 1. As a result of GPC measurement of the obtained resin, the number average molecular weight was approximately 8,000.

Resin 2

Resin 2 was prepared in the same manner as Resin 1. The monomer used was the combination described in Table 2.

Resin 3

2 g of styrene as an aromatic vinyl monomer, 1 g of p-vinyl phenol as a vinyl monomer having a phenol skeleton, and 0.5 g of maleic anhydride as a water-soluble vinyl monomer were mixed in 10 ml of tetrahydrofuran, a solution of 2 ml of tetrahydrofuran in which 0.1 g of separately prepared 2,2'-azobis (isobutyronitrile) dissolved beforehand was added, and the reaction was performed at 60°C for 48 hours. After the reaction, the solvent was removed under reduced pressure and dried to obtain Resin 3. As a result of GPC measurement of the obtained resin, the number average molecular weight was approximately 10,000.

Resin 4

Resin 4 was prepared in the same manner as Resin 2. The monomer used was the combination described in Table 2.

Resin 5

2 g of styrene as an aromatic vinyl monomer and 2 g of maleic anhydride as a water-soluble vinyl monomer were mixed in 10 ml of tetrahydrofuran, a solution of 2 ml of tetrahydrofuran in which 0.1 g of separately prepared 2,2'-azobis (isobutyronitrile) dissolved beforehand was added, and the reaction was performed at 60°C for 48 hours. After the reaction, the solvent was removed under reduced pressure and dried to obtain Resin 5. As a result of GPC measurement of the obtained resin, the number average molecular weight was approximately 9,000.

2.1.3. Preparation of Dispersing Liquids 3 to 8

Dispersing Liquid 3

10 g of the resin 1, 0.9 g of sodium hydroxide as a neutralizing agent, and 140 g of pure water were mixed and dissolved while heating. To the resin 1 aqueous solution, 30 g of C.I. Pigment Violet 19 as a coloring material was mixed, dispersed with a paint shaker (zirconia beads 1.0 mm, bead packing ratio 60%) until the average particle diameter of a pigment is 150 nm, filtered with a filter having a pore diameter of 8 μm, and pure water was added to prepare Magenta dispersing liquid 3 having a coloring material concentration of 12%.

Dispersing Liquids 4 to 8

Dispersing liquids 4 to 8 were prepared in the same manner as the dispersing liquid 3. The materials used were the combinations in Table 3.

Table 3

| Coloring Material Dispersing Liquid | | Dispersing Liquid 3 | Dispersing Liquid 4 | Dispersing Liquid 5 | Dispersing Liquid 6 | Dispersing Liquid 7 | Dispersing Liquid 8 |
|---|---|---|---|---|---|---|---|
| Resin | Resin 1 | 10 g | - | - | - | 5 g | - |
| | Resin 2 | - | 10 g | - | - | - | - |
| | Resin 3 | - | - | 10 g | - | - | - |
| | Resin 4 | - | - | - | 10 g | - | - |
| | Resin 5 | - | - | - | - | 5g | 10 g |
| Neutralizing Agent | Sodium Hydroxide | 0.9 g | 0.65 g | - | - | 0.46 g | - |
| | Triethanolamine | - | - | 2.2 g | 2.1 g | 3.8 g | 7.6 g |
| Pure Water | | 140 g | 150 g | 140 g | 150 g | 140 g | 140 g |
| Coloring Material | Pigment Violet | 30 g | - | 30 g | - | 30 g | 30 g |
| | Disperse Red 60 | - | 25 g | - | 25 g | - | - |

2.1.4. Preparation of Ink

Example 1

Pure water was added to a mixture of 42 g of the dispersing liquid 1, 0.2 g of Surfynol 104 and 3 g of 1,2-hexanediol as a surface tension adjusting agent, 15 g of glycerin and 5 g of 2-pyrrolidone as a moisturizing agent, 0.4 g of silicone-based surfactant Silface SAG 503A as a wetting agent (trade name, manufactured by Nisshin Chemical Industry Co., Ltd.), and 0.2 g triisopropanolamine as a pH adjusting agent up to a total amount of 100 g, mixed, and filtered with a filter having a pore diameter of 8 μm to prepare a Magenta ink 1. The pH of the ink was 9.9.

Examples 2 to 7 and Comparative Examples 1 and 2

For Examples 2 to 7 and Comparative Examples 1 and 2, inks were prepared according to the formulation in Table 4 and the method of Example 1.

Table 4

| Ink Composition Adding Amount (g) | | Example 1 | Example 2 | Example 3 | Example 4 | Example 5 | Example 6 | Example 7 | Comparative Example 1 | Comparative Example 2 |
|---|---|---|---|---|---|---|---|---|---|---|
| Coloring Material Dispersing Liquid | Dispersing Liquid 1 | 42 g | - | - | - | - | - | - | - | - |
| | Dispersing Liquid 2 | - | 50 g | - | - | - | - | - | - | - |
| | Dispersing Liquid 3 | - | - | 42 g | - | - | - | - | - | 42 g |
| | Dispersing Liquid 4 | - | - | - | 50 g | - | - | - | - | - |
| | Dispersing Liquid 5 | - | - | - | - | 42 g | - | - | - | - |
| | Dispersing Liquid 6 | - | - | - | - | - | 50 g | - | - | - |
| | Dispersing Liquid 7 | - | - | - | - | - | - | 42 g | - | - |
| | Dispersing Liquid 8 | - | - | - | - | - | - | - | 42g | |
| Surface Tension Adjusting Agent | Surfynol 104 | 0.2 g | 0.1 g | 0.2 g | 0.1 g | 0.2 g | 0.1 g | 0.2 g | 0.2 g | 0.2 g |
| | 1,2-hexanediol | 3g | - | 3g | - | 3g | - | 3g | 3g | 3g |
| | 3-butoxy-1,2-propanediol | - | 3g | - | 3g | - | 3g | - | - | - |
| Moisturizing Agent | Glycerin | 15 g | - | 15 g | - | 15 g | - | 15 g | 15 g | 15 g |
| | 2-pyrrolidone | 5g | 5g | 5g | 5g | 5g | 5g | 5g | 5g | 5g |
| | Trimethylglycin | - | 15 g | - | 15 g | - | 15 g | - | - | - |
| Wetting Agent | Silface SAG 503A | 0.4 g | - | 0.4 g | - | 0.4 g | - | 0.4 g | 0.4 g | 0.4 g |
| | Olfine E1010 | - | 0.6 g | - | 0.6 g | - | 0.6 g | - | - | - |
| pH Adjusting Agent | Triisopropanolamine | - | - | 0.2 g | 0.2 g | - | - | 0.1 g | 0.2 g | - |
| | Potassium Hydroxide | - | - | - | - | 0.1 | 0.1 | - | - | 0.22 g |
| Pure Water | | Remaining Amount | Remaining Amount | Remaining Amount | Remaining Amount | Remaining Amount | Remaining Amount | Remaining Amount | Remaining Amount | Remaining Amount |
| pH of Ink | | 9.9 | 9.9 | 8.4 | 8.2 | 9.6 | 9.8 | 8.3 | 8.6 | 10.5 |

2.2. Evaluation of ink

2.2.1. Storage stability test

Each ink obtained in Example and Comparative Example was placed in a sample bottle and allowed to stand at 60°C and -20°C for 1 week, and the particle diameters before and after standing were compared to evaluate the storage stability of the ink. Evaluation criteria are indicated below.

Evaluation criteria
A: particle diameter variation is less than ± 10%
B: particle diameter variation is ± 10% or more and less than 25%
C: particle diameter variation is ± 25% or more
D: aggregation and gelation

2.2.2. Preservative Properties Test

The test bacteria (bacteria and fungi) were inoculated into each of the inks obtained in the Examples and Comparative Examples to be a concentration of approximately $10^5$ CFU/g and the number of viable cells after leaving at 25°C for 24 hours was measured and evaluated according to the following evaluation criteria.

Test bacterial species

Escherichia coli, Pseudomonas aeruginosa, Aspergillus oryzae, and Penicillium funiculosum

Evaluation Criteria
Initial: 100,000 CFU/g
A: less than 100 CFU/g
B: 100 CFU/g or more and less than 1,000 CFU/g
C: 1,000 CFU/g or more and less than 10,000 CFU/g
D: 10,000 CFU/g or more

The results of the evaluation test are indicated in Table 5 below.

Table 5

| Ink compositio n | Exampl e1 | Exampl e2 | Exampl e3 | Exampl e4 | Exampl e5 | Exampl e6 | Exampl e7 | Comparativ e Example 1 | Comparativ e Example 2 |
|---|---|---|---|---|---|---|---|---|---|
| Ink storage stability | A | A | A | A | A | A | A | B | C |
| Ink preservativ e properties | A | A | A | A | A | A | A | C | C |

In any of the inks of Examples 1 to 7 of the invention, the particle diameter variation was small and the dispersion stability was high in the ink storage stability test. In addition, any of the inks had favorable antibacterial properties in the preservative properties test and were able to obtain the ink preservative properties without adding the biocidal antibacterial agent. On the other hand, in Comparative Example 1 where the resin does not contain the vinyl monomer having the phenol skeleton, both the storage stability test and the preservative properties test of the ink were inferior to those of the example. In addition, even in Comparative Example 2 where the resin contains the vinyl monomer having the phenol skeleton and the pH of the ink exceeds 10.0, both test results are inferior to those of the example.

As described above, according to the example of the invention, it was possible to obtain an ink in which the preservative properties of the ink can be obtained without using the preservative such as existing biocidal antibacterial agent and the antifungal agent, and to obtain an ink in which the coloring material was stably dispersed.

The invention is not limited to the above-described embodiment, and various modifications are possible. For example, the invention includes a configuration (for example, a configuration in which functions, methods, and results are the same, or a configuration with the same purpose and effect) substantially the same as the configuration described in the embodiment. In addition, the invention includes a configuration in which non-essential parts of the configuration described in the embodiment are replaced. In addition, the invention includes a configuration that achieves the same operation and effect as the configuration described in the embodiment, or a configuration that can achieve the same object. In addition, the invention includes a configuration in which a publicly-known technique is added to the configuration described in the embodiment.

## Claims

1. A water-based ink composition for ink jet recording, which has a pH of 7.0 or more and 10.0 or less, comprising:

    a coloring material;
    a first resin;
    a surface tension adjusting agent; and
    water,
    wherein the first resin contains a first vinyl monomer having a phenol skeleton as a constituent unit;
    the surface tension adjusting agent is at least one selected from the group consisting of a nonionic surfactant having an HLB of 8 or less and a water-soluble organic solvent having a water-octanol partition coefficient (log P value) of 0.5 or more;
    the first resin further contains a second aromatic vinyl monomer other than the vinyl monomer having the phenol skeleton as a constituent unit; and
    the first resin further contains a third water-soluble vinyl monomer as a constituent unit.

2. The water-based ink composition for ink jet recording according to claim 1, further comprising:

    a second resin that contains a second aromatic vinyl monomer and a third water-soluble vinyl monomer as constituent units.

3. The water-based ink composition for ink jet recording according to claim 1 or claim 2,
    wherein a biocidal antibacterial agent or an antifungal agent other than the first resin is contained in an amount of no more than 1% by mass.

4. A coloring material liquid, which has a pH of 7.0 or more and 10.0 or less, comprising:

    the water-based ink composition according to anyone of claims 1 to 3.

## Patentansprüche

1. Wasserbasierte Tintenzusammensetzung zur Tintenstrahlaufzeichnung, die einen pH-Wert von 7,0 oder mehr und 10,0 oder weniger aufweist, umfassend:

    ein Färbungsmaterial;
    ein erstes Harz;
    ein Oberflächenspannungseinstellungsmittel; und

Wasser,
wobei das erste Harz ein erstes Vinylmonomer mit einem Phenolskelett als einen Bestandteil beinhaltet;
das Oberflächenspannungseinstellungsmittel mindestens eines ausgewählt aus der Gruppe bestehend aus einem nichtionischen Tensid mit einem HLB von 8 oder weniger und einem wasserlöslichen organischen Lösemittel mit einem Wasser-Octanol-Trennungskoeffizienten (log P-Wert) von 0,5 oder mehr ist;
das erste Harz ein zweites aromatisches Vinylmonomer, das sich von dem Vinylmonomer mit dem Phenolskelett unterscheidet, als einen Bestandteil beinhaltet; und
das erste Harz weiter ein drittes wasserlösliches Vinylmonomer als einen Bestandteil beinhaltet.

**2.** Wasserbasierte Tintenzusammensetzung zur Tintenstrahlaufzeichnung nach Anspruch 1, weiter umfassend:

ein zweites Harz, das ein zweites aromatisches Vinylmonomer und ein drittes wasserlösliches Vinylmonomer als Bestandteile beinhaltet.

**3.** Wasserbasierte Tintenzusammensetzung zur Tintenstrahlaufzeichnung nach Anspruch 1 oder Anspruch 2, wobei ein biozides antibakterielles Mittel oder ein antifungales Mittel, das sich von dem ersten Harz unterscheidet, in einer Menge von nicht mehr als 1 Masseprozent enthalten ist.

**4.** Färbungsmaterialflüssigkeit, die einen pH-Wert von 7,0 oder mehr und 10,0 oder weniger aufweist, umfassend:

die wasserbasierte Tintenzusammensetzung nach einem der Ansprüche 1 bis 3.

**Revendications**

**1.** Composition d’encre à base d’eau pour l’enregistrement à jet d’encre, laquelle a un pH de 7,0 ou plus et 10,0 ou moins, comprenant :

une matière colorante ;
une première résine ;
un agent d’ajustement de tension superficielle ; et
de l’eau,
dans laquelle la première résine contient un premier monomère vinylique ayant un squelette phénolique en tant qu’unité constitutive ;
l’agent d’ajustement de tension superficielle est au moins l’un sélectionné dans le groupe constitué par un agent tensioactif non ionique ayant un HLB de 8 ou moins et un solvant organique hydrosoluble ayant un coefficient de partage eau-octanol (valeur log P) de 0,5 ou plus ;
la première résine contient en outre un deuxième monomère vinylique aromatique autre que le monomère vinylique ayant le squelette phénolique en tant qu’unité constitutive ; et
la première résine contient en outre un troisième monomère vinylique hydrosoluble en tant qu’unité constitutive.

**2.** Composition d’encre à base d’eau pour l’enregistrement à jet d’encre selon la revendication 1, comprenant en outre :

une deuxième résine qui contient un deuxième monomère vinylique aromatique et un troisième monomère vinylique hydrosoluble en tant qu’unités constitutives.

**3.** Composition d’encre à base d’eau pour l’enregistrement à jet d’encre selon la revendication 1 ou la revendication 2, dans laquelle un agent antibactérien biocide ou un agent antifongique autre que la première résine est contenu selon une quantité de pas plus de 1 % en masse.

**4.** Liquide de matière colorante qui a un pH de 7,0 ou plus et 10,0 ou moins, comprenant :

la composition d’encre à base d’eau selon l’une quelconque des revendications 1 à 3.

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- GB 2072508 A
- WO 0151530 A
- US 20160257835 A
- JP 2010195972 A
- JP 2003063127 A
- JP 2010501671 T


### Non-patent literature cited in the description


- **KENAWY et al.** *Journal of Applied Polymer Science,* 2011, vol. 120 (5), 2734-2742
- **J. T. DAVIES ; E. K. RIDEAL.** Interface Phenomena. Academic Press, 1963